# EUROPÄISCHE PATENTSCHRIFT

(11) **EP 1 840 455 B1**
(45) Veröffentlichungstag und Bekanntmachung des Hinweises auf die Patenterteilung: **14.10.2009**
(21) Anmeldenummer: 07004510.9
(22) Anmeldetag: 06.03.2007
(51) Int. Cl.: F21V 29/00, F21S 8/10

(54) **Beleuchtungseinheit für ein Fahrzeug mit zumindest zwei Lichtquellen**
Vehicle lighting unit with at least two light sources
Ensemble d'éclairage pour véhicule avec au moins deux sources lumineuses

(30) Priorität: 28.03.2006 DE 102006014226
(43) Veröffentlichungstag der Anmeldung: 03.10.2007
(73) Patentinhaber: Volkswagen Aktiengesellschaft, 38436 Wolfsburg (DE)
(72) Erfinder: Werner, Michael, 38104 Braunschweig (DE); Müller, Michael, 38518 Gifhorn (DE)
(74) Vertreter: Reitstötter - Kinzebach

(56) Entgegenhaltungen:
- DE-A1- 10 361 488
- US-B1- 6 414 801

## Beschreibung

Die vorliegende Erfindung betrifft eine Beleuchtungseinheit für ein Fahrzeug mit zumindest zwei Lichtquellen, die in Lichtemissionsrichtung hintereinander angeordnet sind wobei die vordere Lichtquelle eine lichtemittierende Diode ist, die Beleuchtungseinheit eine Abschlussscheibe aufweist und zwischen der hinteren Lichtquelle und der Abschlussscheibe eine Zwischenlichtscheibe ist.

Bei der neuen Gestaltung von Fahrzeugen ergibt sich das Problem, dass aufgrund der gewünschten Aerodynamik und des gewünschten Designs die Bauraumverhältnisse für Beleuchtungseinheiten sehr knapp bemessen sind. Die verschiedenen Beleuchtungseinheiten des Fahrzeugs müssen daher an diese Bauraumverhältnisse und an das neue Design angepasst werden. Hierbei sind auch gesetzliche Bestimmungen für Beleuchtungseinheiten zu berücksichtigen.

Aus der DE 103 02 460 A1, der DE 103 61 488 A1, der US 4,680,678 und der US 6,447,155 B2 sind Beleuchtungseinheiten bekannt, bei denen jeweils zwei Lichtquellen in Lichtemissionsrichtung hintereinander angeordnet sind.

Ferner ist auch aus der DE 100 60 489 A1 eine Fahrzeugleuchte bekannt, bei der zwei Lichtquellen hintereinander angeordnet sind, wobei ein Wärmeschutzelement die hintere Lichtquelle kappenförmig abdeckt.

Aus der US 6,414,801 B1 ist eine Beleuchtungseinheit mit zwei hintereinander liegenden und gekühlten Lichtquellen bekannt.

Aus der DE 10 2004 013 226 A1 ist eine LED-Reflektor-Einheit bekannt, bei der eine Mehrzahl von LED-Elementen auf einem wärmeableitenden Substrat angeordnet sind.

Beleuchtungseinheiten mit mehreren Lichtquellen werden auch als Mehrkammerleuchten bezeichnet. Mehrkammerleuchten besitzen den Vorteil, dass auf sehr begrenztem Raum mehrere Lichtfunktionen bereitgestellt werden können. Bei Mehrkammerleuchten tritt jedoch das Problem auf, dass die Lichtquellen häufiger ausfallen.

Es ist daher die Aufgabe der vorliegenden Erfindung eine Beleuchtungseinheit der eingangs genannten Art bereitzustellen, deren Bauraumbedarf so gering wie möglich ist und die zuverlässig und dauerhaft funktioniert.

Diese Aufgabe wird erfindungsgemäß durch eine Beleuchtungseinheit mit den Merkmalen des Anspruchs 1 gelöst. Vorteilhafte Aus- und Weiterbildungen ergeben sich aus den Unteransprüchen.

Die erfindungsgemäße Beleuchtungseinheit ist dadurch gekennzeichnet, dass zumindest eine Lichtquelle in thermischem Kontakt mit einem Kühlkörper steht. Es hat sich herausgestellt, dass bei Mehrkammerleuchten, die insbesondere hinsichtlich des Bauraums optimiert sind, die Temperaturen im Bereich der Lichtquellen soweit ansteigen, dass es zu Ausfällen der Lichtquellen kommen kann. Durch den Kühlkörper wird eine Wärmesenke bereitgestellt, welche die Lichtquelle abkühlt. Der Kühlkörper kann Wärmeenergie in Bereiche ableiten, welche die Lichtquellen hinsichtlich der thermischen Belastung nicht beeinträchtigen.

Gemäß einer bevorzugten Ausgestaltung der erfindungsgemäßen Beleuchtungseinheit steht die in Lichtemissionsrichtung vordere Lichtquelle in thermischem Kontakt mit dem Kühlkörper. Dabei kann der Kühlkörper insbesondere direkt mit einer Halterung für die vordere Lichtquelle verbunden sein. Alternativ kann die Halterung für die vordere Lichtquelle auch von dem Kühlkörper selbst gebildet sein.

Der Kühlkörper besteht aus einem Metall, insbesondere einem Leichtmetall. Besonders bevorzugt besteht der Kühlkörper aus Aluminium.

Die vordere Lichtquelle, die eine lichtemittierende Diode ist, ist insbesondere eine Hochleistungsleuchtdiode. Bei lichtemittierenden Dioden ergibt sich das Problem, dass bei erhöhter Leistungsaufnahme die Temperatur der Diode ansteigt. Wird die Maximaltemperatur des Halbleiters, welcher die lichtemittierende Diode bildet, überschritten, fällt die lichtemittierende Diode aus. Erfindungsgemäß wird durch den Kühlkörper verhindert, dass die Temperatur der lichtemittierenden Diode über die zulässige Maximaltemperatur steigt.

Gemäß einer weiteren bevorzugten Ausgestaltung der erfindungsgemäßen Beleuchtungseinheit ist die lichtemittierende Diode in einer Lichtscheibe angeordnet. Die Beleuchtungseinheit weist z. B. eine Abschlussscheibe auf.

Erfindungsgemäß ist zwischen der hinteren Lichtquelle und der Abschlussscheibe eine Zwischenlichtscheibe angeordnet, die eine Einwölbung aufweist, in der die lichtemittierende Diode angeordnet ist.

Ferner ist in der Einwölbung ein Lichtbaustein, z. B. ein Linsenelement, für die lichtemittierende Diode, angeordnet.

Der Kühlkörper kann vorzugsweise die hintere Lichtquelle in der zur Lichtemissionsrichtung entgegengesetzten Richtung optisch abschirmen. Auf diese Weise ist der Kühlkörper auf optisch ansprechende Weise in die Beleuchtungseinheit integriert.

Unter einer Beleuchtungseinheit wird im Sinne der Erfindung sowohl eine Heckleuchteneinheit als auch ein vorne angeordneter Scheinwerfer verstanden.

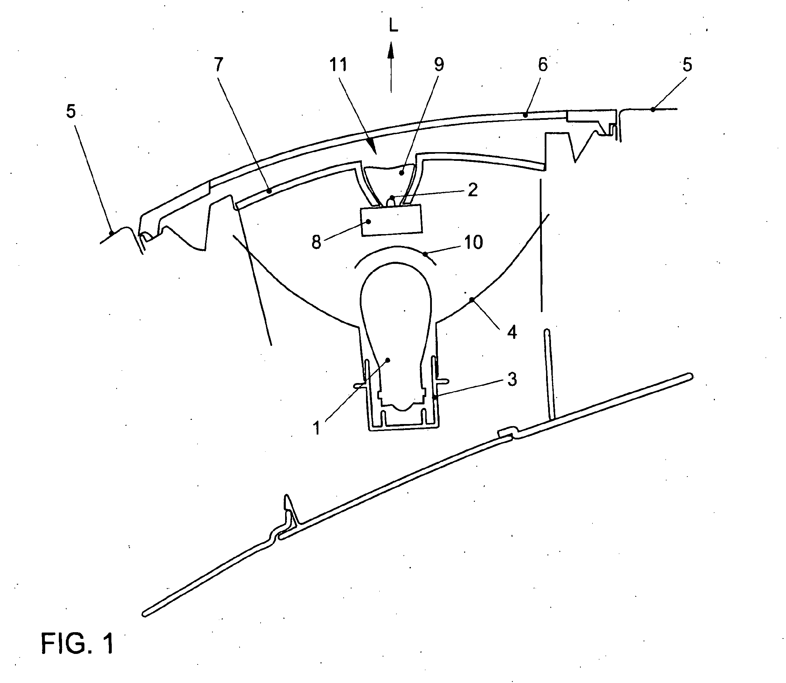

Die Erfindung wird nun anhand eines Ausführungsbeispiels mit Bezug zu der Zeichnung erläutert.

Die Figur zeigt schematisch einen Querschnitt durch ein Ausführungsbeispiel der erfindungsgemäßen Beleuchtungseinheit.

Das Ausführungsbeispiel betrifft eine Heckleuchteneinheit für ein Kraftfahrzeug. Auf gleiche Weise kann die Erfindung jedoch auch bei einem Fahrzeugscheinwerfer Anwendung finden.

Die Heckleuchteneinheit umfasst eine erste Lichtquelle 1, die auf an sich bekannte Weise in einer Halterung 3 befestigt und von einem Reflektor 4 umgeben ist. Die Heckleuchteneinheit ist in einer Aussparung der Karosserieaußenhaut 5 untergebracht. Bündig mit der Karosserieaußenhaut 5 wird die Heckleuchteneinheit von einer Abschlussscheibe 6 abgeschlossen, welche in Klarglasoptik ausgeführt ist.

Die erste Lichtquelle 1 ist eine Glühbirne, welche die Schlusslichtfunktion des Fahrzeugs bereitstellt. Außerdem ist es möglich sie so auszuführen, dass sie zusätzlich die Bremslichtfunktion bereitstellt.

In Lichtemissionsrichtung L der ersten, hinteren Lichtquelle 1 ist eine zweite Lichtquelle 2 angeordnet. Die zweite Lichtquelle 2 ist eine lichtemittierende Diode, insbesondere eine Hochleistungsleuchtdiode, welche den Rückfahrscheinwerfer bereitstellt. In dem Ausführungsbeispiel wird der Rückfahrscheinwerfer von nur einer einzigen lichtemittierenden Diode gebildet.

In Lichtemissionsrichtung L zwischen der ersten Lichtquelle 1 und dem Reflektor 4 einerseits und der Abschlussscheibe 6 andererseits, ist eine Zwischenlichtscheibe 7 angeordnet. Damit von der ersten Lichtquelle 1 die Schlusslicht- und Bremslichtfunktion bereitgestellt werden kann, weist sie einen Filter, üblicherweise einen Rotfilter, auf.

In der Mitte der Zwischenlichtscheibe 7, d. h. vor der ersten Lichtquelle 1, weist die Zwischenlichtscheibe 7 eine Einwölbung 11 auf. Diese Einwölbung 11 kann z. B. trichterförmig sein oder die Form eines Rotationsparaboloids besitzen. In der Mitte der Einwölbung 11 ist eine Öffnung vorgesehen, durch welche die lichtemittierende Diode 2 durchtritt. Die Diode 2 wird an einer Platine gehalten, die wiederum am Rand der Öffnung der Einwölbung 11 befestigt ist.

Die Einwölbung 11 der Zwischenlichtscheibe 7 ist außerdem von einem Lichtbaustein 9 ausgefüllt. Dieser Lichtbaustein 9 kann auch als Linse für die von der lichtemittierenden Diode 2 emittierten Strahlung dienen.

Erfindungsgemäß umfasst die Heckleuchteneinheit ferner einen Kühlkörper 8. Dieser ist am Rand der Öffnung der Einwölbung 11 bzw. an der Platine der lichtemittierenden Diode 2 befestigt. Der Kühlkörper 8 kann auch die Halterung für die lichtemittierende Diode 2 bilden. Der Kühlkörper 8 steht in thermischem Kontakt, insbesondere in direktem thermischen Kontakt mit der lichtemittierenden Diode 2. Der Kühlkörper 8 besteht aus einem Leichtmetall, bevorzugt aus Aluminium, so dass er Wärme von der eingeschalteten lichtemittierenden Diode 2 abführen und in den Raum zwischen dem Reflektor 4 und der Zwischenlichtscheibe 7 abgeben kann. Die sich erwärmende Luft in diesem Bereich kann auf herkömmliche Weise abgeführt bzw. abgekühlt werden.

Der Kühlkörper 8 passt sich auf ästhetisch ansprechende Weise in die Heckleuchteneinheit ein. Er ist aufgrund der Einwölbung 11 in der Zwischenlichtscheibe 7 von außen im Wesentlichen nicht sichtbar. Ferner schirmt er die hintere Lichtquelle 1 von außen optisch ab. Gleichzeitig stellt der Kühlkörper 8 sicher, dass die lichtemittierende Diode 2 nicht die zulässige Maximaltemperatur überschreitet und ausfällt.

Als weitere Maßnahme zum Wärmeschutz der lichtemittierenden Diode 2 kann zwischen dem Kühlkörper 8 und der ersten Lichtquelle 1 eine thermische Abschirmung 10 vorgesehen sein. Diese Abschirmung 10 wirkt als Hitzeschild, so dass sich der Kühlkörper 8 nicht durch Absorption der von der ersten Lichtquelle 1 emittierten Strahlung erwärmt.

### Bezugszeichenliste

- 1: erste Lichtquelle
- 2: zweite Lichtquelle bzw. lichtemittierenden Diode
- 3: Haltung für die erste Lichtquelle
- 4: Reflektor
- 5: Karosserieaußenhaut
- 6: Abschlussscheibe
- 7: Zwischenlichtscheibe
- 8: Kühlkörper
- 9: Lichtbaustein
- 10: Abschirmung
- 11: Einwölbung

## Patentansprüche

1. Beleuchtungseinheit für ein Fahrzeug mit zumindest zwei Lichtquellen (1, 2), die in Lichtemissionsrichtung (L) hintereinander angeordnet sind, wobei die vordere Lichtquelle (2) eine lichtemittierende Diode ist, die Beleuchtungseinheit eine Abschlussscheibe (6) aufweist und zwischen der hinteren Lichtquelle (1) und der Abschlussscheibe (6) eine Zwischenlichtscheibe (7) angeordnet ist,
**dadurch gekennzeichnet,**
**dass** zumindest eine Lichtquelle (1, 2) in thermischem Kontakt mit einem Kühlkörper (8) steht, die Zwischenlichtscheibe (7) eine Einwölbung (11) aufweist, in der die lichtemittierende Diode (2) und ein Lichtbaustein (9) angeordnet sind.

2. Beleuchtungseinheit nach Anspruch 1,
**dadurch gekennzeichnet,**
**dass** in der Mitte der Einwölbung (11) ein Öffnung vorgesehen ist, durch welche die lichtemittierende Diode (2) durchtritt.

3. Beleuchtungseinheit nach Anspruch 1 oder 2,
**dadurch gekennzeichnet,**
**dass** die in Lichtemissionsrichtung (L) vordere Lichtquelle (2) in thermischem Kontakt mit dem Kühlkörper (8) steht.

4. Beleuchtungseinheit nach Anspruch 3,
**dadurch gekennzeichnet,**
**dass** der Kühlkörper (8) direkt mit einer Halterung für die vordere Lichtquelle (2) verbunden ist oder die Halterung bildet.

5. Beleuchtungseinheit nach einem der vorhergehenden Ansprüche,
**dadurch gekennzeichnet,**
**dass** der Kühlkörper (8) aus einem Leichtmetall besteht.

6. Beleuchtungseinheit nach einem der vorhergehenden Ansprüche,
**dadurch gekennzeichnet,**
**dass** die lichtemittierende Diode (2), die Zwischenlichtscheibe (7) und der Kühlkörper (8) eine Vormontageeinheit bilden.

7. Beleuchtungseinheit nach einem der vorhergehenden Ansprüche,
**dadurch gekennzeichnet,**
**dass** der Kühlkörper (8) die hintere Lichtquelle (1) in der zur Lichtemissionsrichtung (L) entgegengesetzten Richtung optisch abschirmt.

## Claims

1. Vehicle lighting unit with at least two light sources (1, 2) which are arranged one behind the other in the direction (L) of the emission of light, wherein the front light source (2) is a light-emitting diode, the lighting unit has a terminating plate (6), and an intermediate light diffusion lens (7) is arranged between the rear light source (1) and the terminating plate (6),
**characterized**
**in that** at least one light source (1, 2) is in thermal contact with a cooling element (8), and the intermediate light diffusion lens (7) has a depression (11) in which the light-emitting diode (2) and a light module (9) are arranged.

2. Lighting unit according to Claim 1,
**characterized**
**in that** an opening, through which the light-emitting diode (2) passes, is arranged in the centre of the depression (11).

3. Lighting unit according to Claim 1 or 2,
**characterized**
**in that** the light source (2) which is at the front in the direction (L) of the emission of light is in thermal contact with the cooling element (8).

4. Lighting unit according to Claim 3,
**characterized**
**in that** the cooling element (8) is directly connected to a mount for the front light source (2) or forms the mount.

5. Lighting unit according to one of the preceding claims,
**characterized**
**in that** the cooling element (8) is composed of a lightweight metal.

6. Lighting unit according to one of the preceding claims,
**characterized**
**in that** the light-emitting diode (2), the intermediate light diffusion lens (7) and the cooling element (8) form a pre-assembled unit.

7. Lighting unit according to one of the preceding claims,
**characterized**
**in that** the cooling element (8) optically screens the rear light source (1) in the direction which is opposed to the direction (L) of the emission of light.

## Revendications

1. Unité d'éclairage pour un véhicule comprenant au moins deux sources de lumière (1, 2) qui sont disposées l'une derrière l'autre dans le sens d'émission de lumière (L), la source de lumière avant (2) étant une diode électroluminescente, l'unité d'éclairage présentant une plaque de terminaison (6) et une plaque d'éclairage intermédiaire (7) étant disposée entre la source de lumière arrière (1) et la plaque de terminaison (6), **caractérisée en ce qu'**au moins une source de lumière (1, 2) est en contact thermique avec un dissipateur thermique (8), la plaque d'éclairage intermédiaire (7) présente une incurvation (11) dans laquelle sont disposées la diode électroluminescente (2) et un composant d'éclairage (9).

2. Unité d'éclairage selon la revendication 1,
**caractérisée en ce qu'**au centre de l'incurvation (11) est prévue une ouverture à travers laquelle passe la diode électroluminescente (2).

3. Unité d'éclairage selon la revendication 1 ou 2, **caractérisée en ce que** la source de lumière avant (2) est en contact thermique avec le dissipateur thermique (8) dans le sens d'émission de lumière (L).

4. Unité d'éclairage selon la revendication 3,
**caractérisée en ce que** le dissipateur thermique (8) est relié directement avec un support pour la source de lumière avant (2) ou forme lui-même le support.

5. Unité d'éclairage selon l'une des revendications précédentes, **caractérisée en ce que** le dissipateur thermique (8) est constitué d'un métal léger.

6. Unité d'éclairage selon l'une des revendications précédentes, **caractérisée en ce que** la diode électroluminescente (2), la plaque d'éclairage intermédiaire (7) et le dissipateur thermique (8) forment une unité prémontée.

7. Unité d'éclairage selon l'une des revendications précédentes, **caractérisée en ce que** le dissipateur thermique (8) réalise la protection optique de la source de lumière arrière (1) dans le sens opposé au sens d'émission de lumière (L).
